# EUROPÄISCHE PATENTSCHRIFT

(11) **EP 2 064 501 B1**
(45) Veröffentlichungstag und Bekanntmachung des Hinweises auf die Patenterteilung: **05.05.2010**
(21) Anmeldenummer: 07818153.4
(22) Anmeldetag: 14.09.2007
(51) Int. Cl.: F25D 3/11, F25D 13/06, A23L 3/36

(54) **VORRICHTUNG ZUM SCHNELLEN FROSTEN VON STOFFEN**
DEVICE FOR THE RAPID FREEZING OF SUBSTANCES
DISPOSITIF DE CONGÉLATION RAPIDE DE MATIÈRES

(30) Priorität: 22.09.2006 DE 102006045324
(43) Veröffentlichungstag der Anmeldung: 03.06.2009
(73) Patentinhaber: Linde AG, 80331 München (DE)
(72) Erfinder: BERGHOFF, Rudolf, Erwin, 59590 Geseke (DE); WIJLENS, Jos, NL-4143 AW Leerdam (NL)
(74) Vertreter: Gellner, Bernd
(86) Internationale Anmeldenummer: PCT/EP2007/008000
(87) Internationale Veröffentlichungsnummer: WO 2008/034557

(56) Entgegenhaltungen:
- US-A- 3 768 739
- US-A- 4 912 943
- US-A- 5 692 382
- US-A- 5 765 381

## Beschreibung

Die Erfindung betrifft eine Vorrichtung zum schnellen Anfrosten der Oberfläche oder Durchfrosten von Ausgangsstoffen, insbesondere von Lebensmitteln oder Pharmazeutika, mit einer Behandlungszone, durch die als Kühlmittel dienendes tiefkaltes flüssiges Gas hindurchströmt, welches dabei zumindest die Oberfläche der Ausgangsstoffe anfrostet und dabei Relativbewegungen zwischen den in das Kühlmittel eingetauchten Ausgangsstoffen bewirkt, wobei die Behandlungszone aus Modulen aufgebaut und in ihrer Länge durch Hinzufügen oder Entfernen von einem oder mehreren Modulen veränderbar ist.

In der Lebensmittelindustrie tritt häufig die Aufgabe auf, aus Ausgangsstoffen durch Frosten sog. IQF (Individual Quick Frozen)-Produkte herzustellen, in denen die gefrosteten Ausgangsstoffe in Behältern verpackt, frei gegeneinander beweglich vorliegen. IQF-Produkte können bei einer Weiterverarbeitung, beispielsweise in der Küche, einfach dosiert werden, und erlauben es, nur einen Teil des Behälterinhalts zu entnehmen, ohne den gesamten Inhalt auftauen zu müssen. Handelt es sich bei den Ausgangsstoffen um nasse Oberflächen aufweisende Lebensmittel, wie beispielsweise um Garnelen, Beeren oder Pilze, so muss während des Frostens für eine Relativbewegung der Ausgangsstoffe zueinander gesorgt werden, da andernfalls die Ausgangsstoffe leicht aneinander festfrieren und Agglomerate bilden können. Stand der Technik ist es, die Relativbewegung durch Rütteleinrichtungen zu erzeugen, in denen die Ausgangsstoffe gefrostet werden, oder sie mittels eines kalten Gasstroms während des Gefriervorgangs zu fluidisieren.

Darüber hinaus sind Einrichtungen bekannt, wie sie u. a. in der Patentschrift EP0393078 beschrieben werden, in denen die Ausgangsstoffe in einem turbulenten oder laminaren Strom aus tiefkaltem flüssigem Gas durch eine Behandlungszone transportiert werden. Die Ausgangsstoffe sind von tiefkaltem flüssigem Gas umgeben, was ein schnelles Gefrieren der Oberfläche hervorruft und damit ein Verkleben der Ausgangsstoffe verhindert. Andererseits wird die erwünschte Relativbewegung zwischen den Ausgangsstoffen hier durch die Turbulenzen im flüssigen Gasstrom oder/und durch siedende Flüssigkeit an der Oberfläche der Ausgangsstoffe erzeugt.

Am Ende der Behandlungszone, wo das flüssige Gas von den Ausgangsstoffen abgetrennt wird, liegt ein Produkt vor, das evtl. durch nachfolgende Behandlungsschritte in ein IQF-Produkt überführt wird.

Der in der Behandlungszone erreichbare Gefrierzustand richtet sich nach der Art und der Menge der eingesetzten Ausgangsstoffe und der Zeit, während der das Kühlmittel und die zu frostenden Ausgangsstoffe in Kontakt sind (Kontaktzeit). Die in der Patentschrift EP0393078 beschriebene Einrichtung bietet zur Variation der Kontaktzeit nur wenige Möglichkeiten, wie die Veränderung des Kühlmittelstroms oder den Austausch des Kühlmittels. Das Spektrum der mittels dieser Einrichtung behandelbaren Ausgangsstoffe ist daher beschränkt.

Aus den Dokumenten US 3,768,739, US 5,692,382, US 4,912,943 und US 5,765,381 sind Vorrichtungen zum Anfrosten oder Durchfrosten von Stoffen bekannt, die jeweils eine Behandlungszone aufweisen, wobei die Behandlungszone aus Modulen aufgebaut und in ihrer Länge durch Hinzufügen oder Entfernen von einem oder mehreren Modulen veränderbar ist.

Aufgabe der vorliegenden Erfindung ist es daher, eine Vorrichtung der eingangs genannten Art anzugeben, die es ermöglicht, die Kontaktzeit auf einfache Weise zu variieren und dadurch den Erfordernissen anzupassen, die sich aus den Eigenschaften der zu frostenden Ausgangsstoffe und den an das durch Frosten erzeugte Produkt gestellten Anforderungen ergeben.

Die gestellte Aufgabe wird erfindungsgemäß dadurch gelöst, dass die Behandlungszone zumindest ein gegen die Waagrechte geneigtes und in seiner Neigung verstellbar angebrachtes Modul aufweist.

Durch die Variierbarkeit der Länge der Behandlungszone ist die Zeit, während der das Kühlmittel und die zu frostenden Ausgangsstoffe in Kontakt sind (Kontaktzeit), ebenfalls veränderbar. Bei sonst gleichen Bedingungen gilt: je länger die Behandlungszone, desto länger ist die Kontaktzeit. Allerdings ist die Kontaktzeit durch Hinzufügen oder Entfernen eines oder mehrerer Module nur in diskreten Schritten veränderbar.

Die erfindungsgemäße Vorrichtung sieht daher vor, dass die Neigung von zumindest einem Modul gegenüber der Waagrechten (Neigung) bevorzugt kontinuierlich verstellbar ist. Die treibende Kraft für die Bewegung sowohl des Kühlmittels als auch der in das Kühlmittel eingetauchten Ausgangsstoffe durch die Behandlungszone, ist in erster Linie die Schwerkraft bzw. die Hangabtriebskraft. Eine Vergrößerung der Neigung eines Moduls führt daher zu einer Vergrößerung dieser treibenden Kraft und damit zu einer Verkürzung der Kontaktzeit. Besteht die Behandlungszone aus mehr als einem Modul, so können die Module gleiche oder unterschiedliche Neigungen aufweisen.

Die erfindungsgemäße Vorrichtung erlaubt es durch gleichzeitige Änderung der Länge der Behandlungszone und der Neigung eines oder mehrerer Module, die Kontaktzeit in einem weiten Bereich kontinuierlich zu verändern und so den Eigenschaften der Ausgangsstoffe (Art, Menge, Temperatur, Wassergehalt) und den an das durch Frosten erzeugte Produkt gestellten Anforderungen gezielt anzupassen.

Darüberhinaus ermöglicht die erfindungsgemäße Vorrichtung den Einsatz von verschiedenen Kühlmitteln, da unterschiedliche Kühleigenschaften der Kühlmittel durch die Veränderung der Kontaktzeit ausgleichbar sind. Bevorzugt sind als Kühlmittel flüssiger Stickstoff oder flüssiger Sauerstoff oder eine Mischung aus flüssigem Stickstoff und flüssigem Sauerstoff vorgesehen.

Um eine erfindungsgemäße Vorrichtung auch bei beengten Platzverhältnissen, wie sie beispielsweise beim Einbau in bestehende Kältebehandlungseinrichtungen (z. B. Tunnelfroster) auftreten, installieren zu können, sieht eine zweckmäßige Ausgestaltung der Erfindung vor, dass zwei in Strömungsrichtung des Kühlmittels aufeinander folgende Module weitgehend untereinander angeordnet sind, wobei die Neigungen der beiden Module dafür sorgen, das die Strömungsrichtungen in den beiden Modulen im Wesentlichen entgegengesetzt gerichtet sind.

Vorteilhafter Weise sind die Module als gerade Rohre oder gerade Rinnen ausgeführt, wobei die Rohre bevorzugt einen rechteckigen und die Rinnen bevorzugt einen U-förmigen Querschnitt aufweisen.

Die erfindungsgemäße Vorrichtung erlaubt es, aus unterschiedlichen Ausgangsstoffen Produkte mit definierter Qualität zu erzeugen. Wegen der Anordnung von mehreren Modulen übereinander, ergibt sich ein kompakter Aufbau einer Behandlungszone, wodurch es möglich ist, eine derartige Vorrichtung in bestehende Froster, wie z.B. in Tunnelfroster, zu integrieren.

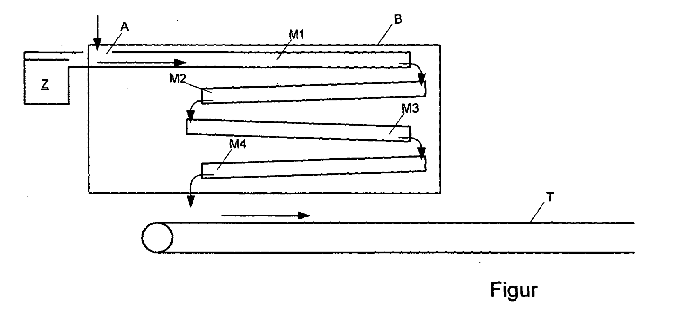

Im Folgenden soll die Erfindung anhand eines in der Figur schematisch dargestellten Ausführungsbeispiels näher erläutert werden. Bei dem Ausführungsbeispiel handelt es sich um eine Einrichtung zur Erzeugung eines IQF-Produktes durch schnelles Frosten von stückigen Ausgangsstoffen in einem flüssigen Kühlmittel. Zur Verdeutlichung sind die Richtungen von Stoffströmen durch Pfeile angedeutet.

Die Vorrichtung ist mit einer Zuführeinrichtung **Z** zur Zuführung eines Kühlmittels, bei dem es sich bevorzugt um tiefkalten flüssigen Stickstoff handelt, ausgestattet, der sich das als Rinne mit U-förmigem Querschnitt ausgeführte erste Modul **M1** der Behandlungszone **B** anschließt. Die Kühlmittelzuführung erfolgt dabei so, dass das Kühlmittel mit einem über den gesamten Strömungsquerschnitt homogenen Profil in das erste Modul **M1** eintritt. Über die Aufgabestelle **A** sind die zu gefrierenden Ausgangsstoffe in die erfindungsgemäße Vorrichtung einbringbar und gelangen auf diesem Wege in das strömende Kühlmittel, von dem sie mitgerissen und dabei gegeneinander bewegt werden.

Unterhalb des ersten Moduls **M1** sind noch weitere Module **M2** bis **M4** untereinander angeordnet, die alle in ihrer Neigung gegenüber der Waagrechten veränderbar sind. Am Ende der Module **M1, M2** und **M3** strömen das Kühlmittel und die vom Kühlmittel mitgerissenen Ausgangsstoffe nach unten und gelangen so in das jeweils folgende Modul. Die Anzahl der Module und ihre Neigungen sind so gewählt, dass das Produkt am Ende des Moduls **M4** einen definierten Frostungsgrad aufweist, mit dem es auf das unterhalb der Behandlungszone **B** angeordnete Transportband T fällt, mit dem es, nach Abtrennung des Kühlmittels, einer weiteren, nicht dargestellten Kältebehandlung oder dem Abpacken zuführbar ist.

## Patentansprüche

1. Vorrichtung zum schnellen Anfrosten der Oberfläche oder Durchfrosten von Ausgangsstoffen, insbesondere von Lebensmitteln oder Pharmazeutika, mit einer Behandlungszone, durch die als Kühlmittel dienendes tiefkaltes flüssiges Gas hindurchströmt, welches dabei zumindest die Oberfläche der Ausgangsstoffe anfrostet und dabei Relativbewegungen zwischen den in das Kühlmittel eingetauchten Ausgangsstoffen bewirkt, wobei die Behandlungszone aus Modulen aufgebaut und in ihrer Länge durch Hinzufügen oder Entfernen von einem oder mehreren Modulen veränderbar ist, **dadurch gekennzeichnet, dass** die Behandlungszone zumindest ein gegen die Waagrechte geneigtes und in seiner Neigung verstellbar angebrachtes Modul aufweist.

2. Vorrichtung nach Anspruch 1, dass zwei in Strömungsrichtung des Kühlmittels aufeinander folgende Module weitgehend untereinander angeordnet sind, wobei die Neigungen der beiden Module dafür sorgen, das die Strömungsrichtungen in den beiden Modulen im Wesentlichen entgegengesetzt gerichtet sind.

3. Vorrichtung nach einem der Ansprüche 1 oder 2, **dadurch gekennzeichnet, dass** die Module als gerade Rohre oder gerade Rinnen ausgeführt sind, wobei die Rohre bevorzugt einen rechteckigen und die Rinnen bevorzugt einen U-förmigen Querschnitt aufweisen.

## Claims

1. Device for the rapid freezing of the surface or full freezing of starting substances, in particular of foodstuffs or pharmaceuticals, with a treatment zone, through which flows the low-temperature liquid gas which serves as a coolant and which at the same time freezes at least the surface of the starting substances and at the same time causes relative movements between the starting substances dipped into the coolant, the treatment zone being constructed from modules, and its length being variable by the addition or removal of one or more modules, **characterized in that** the treatment zone has at least one module which is inclined with respect to the horizontal and which is mounted so as to have an adjustable inclination.

2. Device according to Claim 1, **characterized in that** two modules succeeding one another in the direction of flow of the coolant are arranged essentially one below the other, the inclinations of the two modules ensuring that the directions of flow in the two modules are directed essentially opposite to one another.

3. Device according to either one of Claims 1 or 2, **characterized in that** the modules are designed as straight tubes or straight channels, the tubes preferably having a rectangular cross section and the channels preferably having a U-shaped cross section.

## Revendications

1. Dispositif de congélation rapide de la surface, ou de congélation en profondeur de matières de départ, notamment d'aliments ou de produits pharmaceutiques, comprenant une zone de traitement à travers laquelle s'écoule du gaz liquide cryogénique servant de réfrigérant, qui congèle ainsi au moins la surface des matières de départ, et effectue en l'occurrence des mouvements relatifs entre les substances de départ plongées dans le réfrigérant, la zone de traitement étant constituée de modules et sa longueur pouvant être modifiée en ajoutant ou en enlevant un ou plusieurs modules, **caractérisé en ce que** la zone de traitement présente au moins un module incliné par rapport à l'horizontale et monté de manière réglable en inclinaison.

2. Dispositif selon la revendication 1, **caractérisé en ce que** deux modules successifs dans la direction d'écoulement du réfrigérant sont disposés essentiellement l'un en dessous de l'autre, les inclinaisons des deux modules faisant en sorte que les sens d'écoulement dans les deux modules soient orientés essentiellement en sens inverse.

3. Dispositif selon l'une quelconque des revendications 1 ou 2, **caractérisé en ce que** les modules sont réalisés sous forme de tubes droits ou de rigoles droites, les tubes présentant de préférence une section transversale rectangulaire et les rigoles présentant de préférence une section transversale en forme de U.
